# EUROPEAN PATENT APPLICATION

(11) **EP 3 795 969 A1**
(43) Date of publication of application: **24.03.2021**
(21) Application number: 19198125.7
(22) Date of filing: 18.09.2019
(51) Int. Cl.: G01L 1/00, G01L 1/26

(54) **FORCE GAUGE**

(71) Applicant: Von Tringelberg UG, 12557 Berlin (DE)
(72) Inventor: ERTELT, Thomas, 12557 Berlin (DE); SOLOMONOVS, Ilja, 10405 Berlin (DE)
(74) Representative: Maiwald Patent- und Rechtsanwaltsgesellschaft mbH

(57) **Abstract**

The disclosure provides a force gauge (100), comprising: a, preferably foil-based, sensor element (110), adapted to output an electric signal in response to a force exerted on the sensor element in a thickness direction (T) of the sensor element (110), and at least one spring element (120), arranged overlapping with the sensor element (110) in the thickness direction of the sensor element (110) and having a defined spring characteristic, wherein the sensor element (110) and the at least one spring element (120) together at least partly define a signal characteristic of the force gauge (100) within an operational range with a lower limit (L2) and an upper limit (L1).

## Description

### Field of the invention

The present invention relates to the field of force measurement. In particular, the present invention relates to a force gauge and a method of manufacturing a force gauge. The force gauge may provide a universally adjustable sensor design for precise force measurement in industry, automotive, medicine, etc.

### Background of the invention

Different force gauges may be used for force measurement, such as strain gauges, piezo sensors, capacitive sensors, or the like. With such force gauges, the read sensor values, which may consist of electrical signals, such as e.g. voltage signals, may be amplified by e.g. means of e.g. voltage or charge amplifiers, and may then be converted into absolute force measurement values by means of software, electronic circuits, or the like. Further, with such force gauges, the resolution and the load range of the sensor may vary greatly, e.g. depending on the application of the force gauge. The amplifier and/or evaluation electronics used may also vary greatly, which can be reflected, for example, in a large variety of variants and/or comparatively high costs of provision. Furthermore, such force gauges may be accommodated in housings, some of which are elaborately designed, wherein a large number of variants may be required.

There are also foil-based force gauges, which may be made available in a wide variety of variants for a wide variety of applications. Due to e.g. the low thickness of the foil, these foil-based force gauges may be provided comparatively flat. By way of example, such a foil-based force gauge may be provided as a force-sensing resistor (FSR), wherein a resistance of the FSR changes when a force, load, pressure or mechanical stress is applied. Basically, such FSR may comprise two plastic/polymer membranes which are separated from each other by a thin gap of non-conductive materials depending on their construction. Commonly, a FSR is based on conductive and/or semi-conductive inks, which are mechanically deformed as a result of the force applied so that the resistance value of the FSR changes. One of the membranes may comprise two sets of electrodes, the other may be printed with a semi-conductive ink. From a mechanical point of view, the load on the sensor evaluates the compression of the ink in the vertical direction of the FSR. The composition of the three components enables the resistance of the components to change as predictably as possible by applying a defined force to the sensor surface.

However, the FSR technology may not be regarded as an instrument for quantitative force measurement, but rather as a qualitative instrument for assessing whether a force acts on the force gauge or not. By way of example, it has been shown that the FSR technology leads to non-linear characteristic curves of the force-representing signal due to the materials and designs used and may already be provisioned with signal fluctuations during production. As a result, the FSR technology may not be suitable for the precise determination of forces, in particular high forces, since a light contact may provide a strong decrease of resistance and a stronger force may reduce the resistance only slightly. Further, it has been shown that a FSR quickly reaches its saturation range. Furthermore, plastic deformations of the FSR may also occur, which can lead to destruction of the sensor. It is noted that these or similar restrictions may also be applied to other foil-based force gauges.

Therefore, there may be a need to make a force gauge suitable for a wider variety of applications.

### Summary of the invention

The present invention provides a force gauge and a method of manufacturing a force gauge.

A first aspect of the invention provides a force gauge that may particularly be adapted for detecting a force or load applied to the force gauge and/or a part or section of it. The force gauge comprises
a, optionally foil-based, sensor element, adapted to output an electric signal in response to a force exerted on the sensor element in a thickness direction of the sensor element, and
at least one spring element, arranged overlapping with the sensor element in the thickness direction of the sensor element and having a defined spring characteristic,
wherein the sensor element and the at least one spring element together at least partly define a signal characteristic of the force gauge within an operational range with a lower limit and an upper limit.

The sensor element may preferably be provided in layer technique and may preferably be provided as a foil-based sensor element. It is noted that the sensor element may also be provided as a load cell, load transducer, or the like. The sensor element may be essentially flat and may therefore have two opposite flat sides which at least partially overlap with the at least one spring element. The spring element may also be referred to as an envelope, a sheathing, a jacket etc., at least partially surrounding or enclosing the sensor element. Further, the spring element may form an adjustment mechanism, which may particularly be adapted to adjust the operational range of the force gauge to, for example, a specific application. The spring element may be adapted to encapsulate the sensor element to hermetically seal the sensor element. The spring element may protect the sensor element from mechanical influences and resulting damage. The defined spring characteristic of the spring element may comprise at least one of a spring constant, hardness, stiffness, rigidity, or the like, of the spring element. The operational range of the force gauge may be defined as a range in which a voltage value range, e.g. 1 to 6 V or other values, may represent a force value range, e.g. 0 to 600 N, 0 to 3000 N, 0 to 4500 N or other values. The operational range defined by the interaction between the sensor element and the spring element may particularly be smaller than the operational range of the sensor element when considered alone.

Thus, the sensor element may be enabled to be applicable to a wide variety of applications, since the sensor element and the spring element work together to make the operational range of the force gauge adjustable to different applications. In addition, the response signal characteristic and the saturation range of the force gauge may be adjusted by selecting the sensor element and/or the spring element from different variants. It is noted that the number of spring elements may vary from one to a plurality of spring elements, wherein the plurality of spring elements may differ from each other. Further, the spring element may allow a blunt and full-surface load introduction on the one hand, and may protect the sensor from destruction due to pointed or punctual loading on the other hand. The defined operational range may provide a signal characteristic that is at least quasi-linear or linear, resulting in a precise force measurement. Hence, the force gauge may provide a quantitative force measurement.

In an embodiment, the defined operational range may deviate in at least one of the lower limit and the upper limit from a reference operational range which the sensor element has or would have when considered alone. Preferably, the defined operational range may be smaller than the reference operational range of the sensor element when considered alone. Preferably, within the defined operational range, the signal characteristic of the force gauge may be at least quasi linear or linear.

Thus, the force gauge may particularly suitable for quantitative force measurement, enabling precise determination of forces.

According to an embodiment, the defined operational range is narrower than the reference operational range, wherein preferably the defined signal characteristic within the defined operational range has an at least quasi-linear component.

Thus, the force gauge may particularly suitable for quantitative force measurement, enabling precise determination of forces.

In an embodiment, the force gauge may further comprise at least one biasing element, adapted to apply a preload in the thickness direction of the sensor element, preferably so as to shift at least one of the lower limit and upper limit. Preferably, the preload applied by the biasing element acts on the spring element.

Thus, the operational range of the force gauge may be set more precisely.

According to an embodiment, the force gauge may further comprise at least one abut element, adapted to limit maximum compression of the sensor element in the thickness direction of the sensor element, preferably so as to shift at least one of the lower limit and upper limit. The abut element may also be referred to as a block element. Further, the abut element may be arranged so as to limit the maximum compression of the spring element. The abut element may be constructed in several parts, whereby the parts may differ from each other.

Thus, the operational range of the force gauge may be set more precisely, in particular in terms of the maximum force or load.

In an embodiment, the sensor element and the at least one spring element may be arranged as overlapping layers, and
the at least one spring element may be arranged between the sensor element and a force application area.

Thus, a particularly compact force gauge may be provided.

According to an embodiment, the sensor element may be arranged overlapping in the thickness direction of the sensor element with a first spring element arranged on a first flat side of the sensor element and a second spring element arranged on a second flat side of the sensor element, and
the spring characteristic of the first spring element and the second spring element may differ from each other.

Thus, the operational range of the force gauge may be set more precisely.

In an embodiment, the sensor element may be arranged in a recess of one of the first and second spring element, and
the sensor element may at least partly be covered by the other of the first and second spring element.

Thus, a particularly compact force gauge may be provided.

According to an embodiment, the at least one spring element may be selected from: a rubber, a foam rubber, a foamed plastic and a mechanical spring. By way of example, the spring element may be selected from different foams, such as PU, silicones, rubber, etc., and/or from different springs, such as a flat spring, leaf spring, diaphragm spring, standard spring, form spring, clamp spring, torsion spring, compression spring, tension spring, conical spring, barrel spring, torsion spring etc.

Thus, the operational range of the force gauge may be set more precisely.

In an embodiment, the force gauge may further comprise
a housing, and
the sensor element and the at least one spring element may be sandwiched between inner sides of the housing. The housing may comprise several parts. In at least some embodiments, the housing may be provided by the spring element or may have a defined spring characteristic itself.

Thus, a particularly robust force gauge may be provided.

According to an embodiment, the force gauge may further comprise an evaluation electronics, connected to at least the sensor element. The evaluation electronics may be hardware- and/or software-based. It may comprise one more electric circuits, an analog-to-digital converter, an amplifier, at least one microcontroller, at least one memory, such as a memory card, e.g. an SD-card, or a flash memory, at least one communication interface, such as a transmitter and/or receiver, e.g. Bluetooth, NFC, ANT, Wi-Fi, or the like, adapted to be connected to external devices. In at least some embodiments, the evaluation electronics may be embedded into the force gauge. In at least some embodiments, the evaluation electronics may be arranged outside the force gauge and may be connected remotely with the sensor element, e.g. by means of the communication interface.

Thus, the force gauge may operate independently from other systems, and may be provided as an embedded system.

In an embodiment, the force gauge may further comprise a power supply, connected to at least the sensor element. In at least some embodiments, the evaluation electronics may be embedded into the force gauge.

Thus, the force gauge may operate independently from other systems, and may be provided as an embedded system.

According to an embodiment, the force gauge may further comprise a radio communication interface, connected to at least the sensor element. By way of example, the radio communication interface may comprise a transmitter and/or receiver, based on e.g. Bluetooth, NFC, ANT, Wi-Fi, or the like, and adapted to be connected to external devices.

Thus, the force gauge may operate independently from other systems, and may be provided as an embedded system.

A second aspect of the invention provides a force measuring system, comprising a plurality of force gauges according to any one of the above embodiments, wherein the force gauges are arranged in a mesh network. Within the mesh network, an interaction between the force gauges may be possible via e.g. the integrated electronics. In at least some embodiments, a first force gauge may be defined as a host, and the other force gauges may be defined as one more clients, with the host exclusively transmitting the data to a remote or terminal device, while the clients exclusively send the data to the host. Other constellations are also possible, however, in which each force gauge may send individually to a remote or terminal device in the same setting.

Thus, several force gauges may be integrated within the force measuring system, allowing an even wider variety of applications.

A third aspect of the invention provides a method of manufacturing a force gauge, the method comprising:
providing a, preferably foil-based, sensor element, adapted to output an electric signal in response to a force exerted on the sensor element in a thickness direction of the sensor element, and
arranging at least one spring element overlapping with the sensor element in the thickness direction of the sensor element, the at least one spring element having a defined spring characteristic,
wherein the sensor element and the spring element together at least partly define an application-specific signal characteristic of the force gauge within an operational range with a lower limit and an upper limit.

Thus, the sensor element may be enabled to be applicable to a wide variety of applications, since the sensor element and the spring element work together to make the operational range of the force gauge adjustable to different applications. In addition, the response signal characteristic and the saturation range of the force gauge may be adjusted by selecting the sensor element and/or the spring element from different variants. It is noted that the number of spring elements may vary from one to a plurality of spring elements, wherein the plurality of spring elements may differ from each other. Further, the spring element may allow a blunt and full-surface load introduction on the one hand, and may protect the sensor from destruction due to pointed or punctual loading on the other hand. The defined operational range may provide a signal characteristic that is at least quasi-linear or linear, resulting in a precise force measurement. Hence, the force gauge may provide a quantitative force measurement.

According to an embodiment, the lower limit and/or the upper limit of the operational range may be adjusted application-specifically by selecting the at least one spring element as a function of its defined spring characteristic. The defined spring characteristic of the spring element may comprise at least one of a spring constant, hardness, stiffness, rigidity, or the like, of the spring element.

Thus, the operational range of the force gauge may be adjusted by particularly selecting the spring element from different variations.

In an embodiment, the lower limit and/or the upper limit of the operational range may be adjusted by providing at least one of
at least one biasing element, adapted to apply a preload in the thickness direction of the sensor element, and
at least one abut element, adapted to limit maximum compression of the sensor element in the thickness direction of the sensor element.

Thus, the operational range of the force gauge may be set more precisely.

It should be noted that embodiments as described above may be combined with respect to each other so as to gain a synergetic effect, which may extend over the separate technical effects of the single features. Exemplary embodiments of the present invention will be described in the following. Further, embodiments of the invention are described with reference to different subject-matters. In particular, some embodiments are described with reference to method-type claims, whereas other embodiments are described with reference to device-type claims. However, a person skilled in the art will gather from the above, and the following description that, unless otherwise notified, in addition to any combination of features belonging to one type of subject-matter, also other combinations between features relating to different subject-matters is considered to be disclosed with this application.

### Brief description of the Figures

Exemplary embodiments of the invention will be described in the following with reference to the following figures.
- Figure 1: shows in a schematic sectional view a force gauge according to an embodiment of the invention.
- Figure 2: shows in a schematic sectional view a force gauge according to an embodiment of the invention.
- Figure 3: shows in a schematic sectional view a force gauge according to an embodiment of the invention.
- Figure 4: shows a first operational range of a force gauge, which does not comprise a spring element, and second operation range of a force gauge according to an embodiment of the invention, wherein the second operational range may be obtained by using a spring element that work together with a sensor element of the force gauge.
- Figure 5: shows in a voltage-force diagram an operational range of a force gauge according to an embodiment of the invention that is defined by an interaction of a sensor element and a spring element of the force gauge, the operational range comprising an at least quasi linear signal characteristic.

- Figure 6: shows in a force diagram a comparison of a measurement signal of a force gauge according to an embodiment of the invention and a measurement signal of a high-precision sensor specifically designed for the specific application.
- Figure 7: shows in a flow chart a method of manufacturing a force gauge according to an embodiment of the invention.

### Detailed description of exemplary embodiments

In the following, a detailed description of exemplary embodiments will be given to explain the invention in more detail.

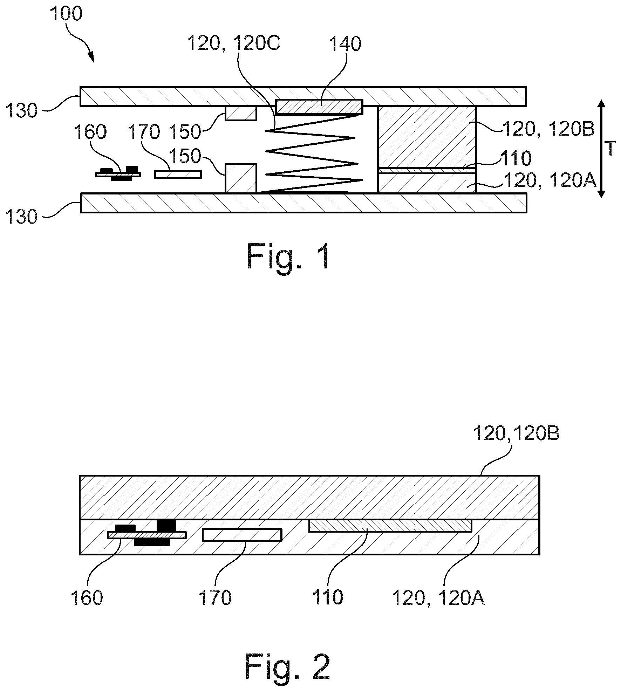

Figure 1 shows in a schematic sectional view a force gauge 100 according to an embodiment. The force gauge 100 may be universally adapted or adjusted to a wide variety of applications for precise force measurement in industry, automotive, medicine, etc.

The force gauge 100 according to this embodiment comprises a sensor element 110 which is adapted to output an electric signal in response to a force exerted on the sensor element 110 in a thickness direction T of the sensor element 110. By way of example, the sensor element 110 is provided in layer technique, and is particularly provided as a foil-based sensor element. Such a foil-based sensor element may be based on or similar to an FSR as described above. It is noted that the sensor element 100 may also be based on a different sensor technology.

The force gauge 100 further comprises at least one spring element 120 that is arranged overlapping with the sensor element 110 in the thickness direction of the sensor element 110. The sensor element 110 has a defined spring characteristic, which may be expressed by a specific spring constant, hardness, stiffness, rigidity, or the like, of the spring element 120. By way of example, the sensor element 110 is sheathed by two different spring elements 120, namely a first spring element 120A and a second spring element 120B. The first spring element 120A may primarily provide a suitable support for the sensor element 110 and the second spring element 120B may primarily provide an adjustment mechanism for adjusting the operational range and/or the response of the force gauge 100. In at least some embodiments, there may be one or more further, third spring elements 120, such as spring element 120C, which, in the embodiment according to Figure 1, is arranged so as to act in the thickness direction T. In this way, the further spring element 120C may be a further part of the adjustment mechanism for adjusting the operational range and/or the response of the force gauge 100. As exemplarily shown in Figure 1, the one or more spring elements 120 may be selected from a rubber, a foam rubber, a foamed plastic and a mechanical spring, or an combination thereof. In Figure 1, an upper side of the force gauge 100 represents a force application area.

In at least some embodiments, the force gauge 100 may further comprise a housing 130, at least one biasing element 140, e.g. an adjustable plate or the like, at least one abut element 150, an evaluation electronic 160, and a power supply 170. In the embodiment according to Figure 1, components 110, 120 and 140 to 170 of the force gauge 100 are accommodated within the housing 130.

Figure 2 shows in a schematic sectional view a force gauge 100 according to an embodiment. Deviating from the embodiment described above with reference to Figure 1, the force gauge 100 according to this embodiment does not comprise the further, third spring element 120C. Accordingly, the adjustment mechanism for adjusting the operational range and/or the response of the force gauge 100 mainly comprises the spring elements 120A and 120B. It is noted that the force gauge 100 according to this embodiment may optionally comprise the housing 130, which is not shown here. As can be seen in Figure 2, the sensor element 110, the evaluation electronic 160, and/or the power supply 170 may be arranged in a recess of one of the first and second spring element 120A and 120B, wherein these components are at least partly covered by the other one of the first and second spring element 120A and 120B.

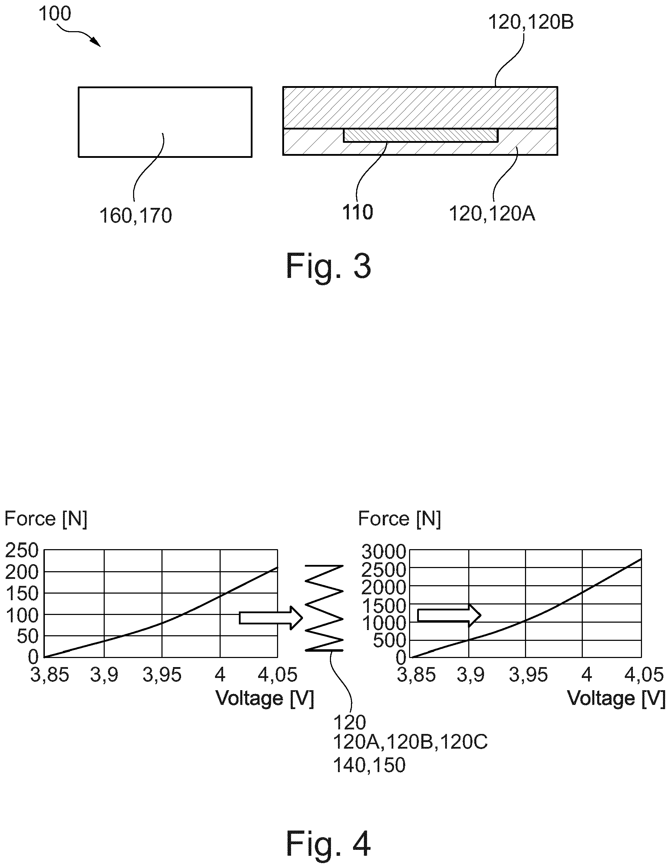

Figure 3 shows in a schematic sectional view a force gauge 100 according to an embodiment. Deviating from the embodiments described above with reference to Figure 1 or Figure 2, in the force gauge 100 according to this embodiment, the evaluation electronic 160 and/or the power supply 170 are arranged separately to the sensor element 110 and the spring elements 120A and 120B.

It is noted that the embodiments according to Figures 1 to 3 may be combined with each other. In particular, individual features of these embodiments may be combined in order to adapt the force gauge 100 to individual applications.

The embodiments described above with reference to Figures 1 to 3 may have in common that the sensor element 110 and the at least one spring element 120 (e.g. spring elements 120A, 120B and 120C) together at least partly define a signal characteristic of the force gauge 100 within an operational range with a lower limit and an upper limit. In particular, the defined operational range may deviate in at least one of the lower limit and upper limit from a reference operational range which the sensor element 110 would have when considered alone (i.e. without the spring element 120). Depending on e.g. the individual application of the force gauge 100, the at least one biasing element 140 and/or at least one abut element 150 may be optionally provided to further adjust the operational range.

Figure 4 illustrates this interaction between the sensor element 110 and the at least one spring element 120 and/or the at least one biasing element 140 and/or the least one abut element 150. On the left, a first operational range is shown in a voltage-force diagram. This first operational range may represent the reference operational range as described above. On the right, a second operational range is shown in a voltage-force diagram. This second operational range may represent the defined operational range of the force gauge 100 according to the embodiments described above, which may be obtained by using the at least one spring element 120 together with the sensor element 110. As can be seen in Figure 4, providing the at least one spring element 120 shifts the operational range of the force gauge 100 from e.g. 0 to 250 N to e.g. 0 to 3000 N, wherein these values a only examples that may differ from application to application. Optionally, the defined operational range may further be adjusted by providing the at least one biasing element 140 and/or the least one abut element 150.

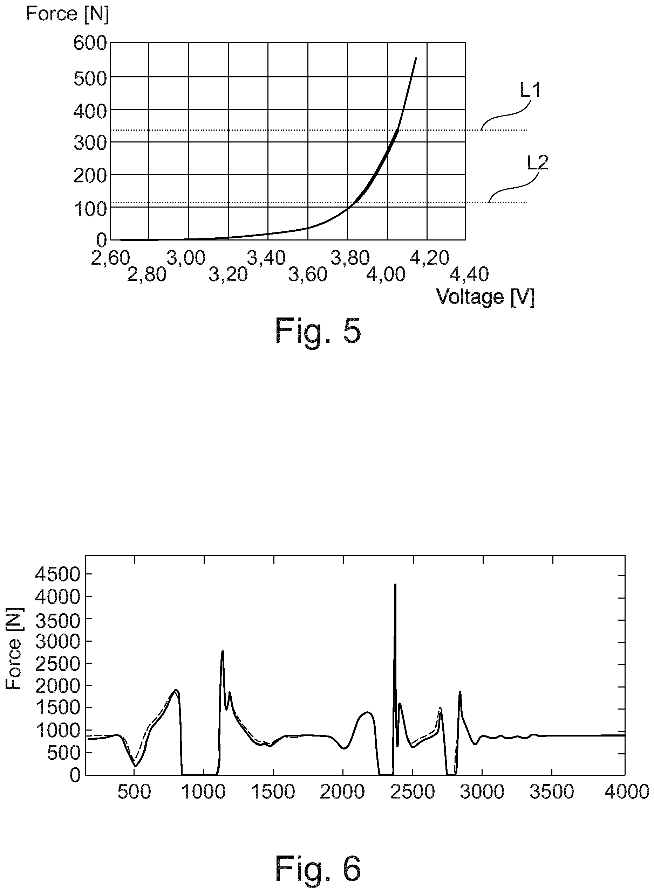

Figure 5 shows in a voltage-force diagram the operational range of the force gauge 100 according to an embodiment of the invention. The operational range is defined and may be adjustable by an interaction of the sensor element 110 and the at least one spring element 120 of the force gauge 100, wherein the defined operational range comprises an at least quasi-linear signal characteristic within an upper limit L1 and a lower limit L2. Accordingly, the at least one spring element 120 may be selected from different variants so as to adjust the operational range and/or the upper limit L1 and/or the lower limit L2 to a specific application of the force gauge 100. As can be seen in Figure 5, the defined operational range is narrower than the reference operational range, wherein the defined signal characteristic within the defined operational range has the at least quasi-linear component. Within the defined operation range, the force gauge 100 may allow precise force measurement that may be adapted to a wide variety of applications.

As exemplarily described with reference to Figure 1, the operational range and/or the upper limit L1 and/or the lower limit L2 may be further adjusted by optionally providing the at least one biasing element 140 and/or the at least one abut element 150. In particular, the at least one biasing element 140 may be adapted to apply a preload in the thickness direction T of the sensor element 110, preferably so as to shift at least one of the lower limit L2 and the upper limit L1. Further, the at least one abut element 150 may be adapted to limit a maximum compression of the sensor element 110 in the thickness direction T of the sensor element 110 so as to shift at least one of the lower limit L2 and upper limit L1. Likewise, providing one or more of the third spring elements 120C may also allow to individually adjust the operational range and/or the upper limit L1 and/or the lower limit L2 to a specific application of the force gauge 100.

Figure 6 illustrates in a force diagram a comparison of a measurement signal of the force gauge 100 according to an embodiment of the invention and a measurement signal of a high-precision sensor (not shown) specifically designed for the specific application. As can be seen, the application-specific selection of the at least one spring element 120 allows high precision measurement of forces when still using the sensor element 110. In Figure 6, the solid line indicates the measurement signal provided by the force gauge 100 according to an embodiment and the dashed line indicates the measurement provided by the high-precision sensor (not shown) specifically designed for the specific application. As can be seen, the two lines or signals are largely congruent. This means that the force gauge 100 can be set most accurately for a specific application by a suitable selection of one or more of the spring elements 120 described above.

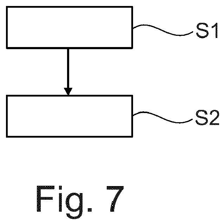

Figure 7 shows in a flow chart a method of manufacturing a force gauge according to an embodiment.

In a first step S1, the sensor element 110 is provided. The sensor element 110 is adapted to output an electric signal in response to a force exerted on the sensor element 110 in the thickness direction T of the sensor element 110.

In a first step S2, the at least one spring element 120 is arranged overlapping with the sensor element 110 in the thickness direction of the sensor element 110, wherein the at least one spring element 120 has a defined spring characteristic.

As described above, the sensor element 110 and the at least one spring element 120 together at least partly define an application-specific signal characteristic of the force gauge 100 within an operational range with a lower limit L2 and an upper limit L1.

## Claims

1. A force gauge (100), comprising:
a, preferably foil-based, sensor element (110), adapted to output an electric signal in response to a force exerted on the sensor element in a thickness direction (T) of the sensor element (110), and
at least one spring element (120), arranged overlapping with the sensor element (110) in the thickness direction of the sensor element (110) and having a defined spring characteristic,
wherein the sensor element (110) and the at least one spring element (120) together at least partly define a signal characteristic of the force gauge (100) within an operational range with a lower limit (L2) and an upper limit (L1).

2. The force gauge (100) according to claim 1, wherein
the defined operational range deviates in at least one of the lower limit and upper limit from a reference operational range which the sensor element has when considered alone.

3. The force gauge (100) according to claim 2, wherein
the defined operational range is narrower than the reference operational range, wherein preferably the defined signal characteristic within the defined operational range has an at least quasi-linear component.

4. The force gauge (100) according to any one of the preceding claims, further comprising
at least one biasing element (140), adapted to apply a preload in the thickness direction of the sensor element (110), preferably so as to shift at least one of the lower limit and upper limit.

5. The force gauge (100) according to any one of the preceding claims, further comprising
at least one abut element (150), adapted to limit maximum compression of the sensor element (110) in the thickness direction of the sensor element (110), preferably so as to shift at least one of the lower limit (L2) and upper limit (L1).

6. The force gauge (100) according to any one of the preceding claims, wherein
the sensor element (110) and the at least one spring element (120) are arranged as overlapping layers, and
the at least one spring element (120) is arranged between the sensor element (110) and a force application area.

7. The force gauge (100) according to any one of the preceding claims, wherein
the sensor element (110) is arranged overlapping in the thickness direction (T) of the sensor element (110) with a first spring element arranged on a first flat side of the sensor element (110) and a second spring element (120) arranged on a second flat side of the sensor element (110), and
the spring characteristic of the first spring element (120) and the second spring element (120) differ from each other.

8. The force gauge (100) according to claim 7, wherein
the sensor element (110) is arranged in a recess of one of the first and second spring element (120), and
the sensor element (110) is at least partly covered by the other of the first and second spring element (120).

9. The force gauge (100) according to any one of the preceding claims, wherein the at least one spring element (120) is selected from: a rubber, a foam rubber, a foamed plastic and a mechanical spring.

10. The force gauge (100) according to any one of the preceding claims, further comprising
a housing (130), and
the sensor element (110) and the at least one spring element are sandwiched between inner sides of the housing (130).

11. The force gauge (100) according to any one of the preceding claims, further comprising
an evaluation electronics (160), connected to at least the sensor element.

12. A force measuring system, comprising a plurality of force gauges (100) according to any one of the preceding claims, wherein the force gauges (100) are arranged in a mesh network.

13. A method of manufacturing a force gauge (100), comprising:
providing a, preferably foil-based, sensor element (110), adapted to output an electric signal in response to a force exerted on the sensor element (110) in a thickness direction (T) of the sensor element (110), and
arranging at least one spring element (120) overlapping with the sensor element in the thickness direction (T) of the sensor element (110), the at least one spring element having a defined spring characteristic,
wherein the sensor element (110) and the spring element (120) together at least partly define an application-specific signal characteristic of the force gauge within an operational range with a lower limit (L2) and an upper limit (L1).

14. The method according to claim 13, wherein
the lower limit (L2) and/or the upper limit (L1) of the operational range is adjusted application-specifically by selecting the at least one spring element (120) as a function of its defined spring characteristic.

15. The method according to any one of claims 13 or 14,
the lower limit (L2) and/or the upper limit (L1) of the operational range is adjusted by providing at least one of
at least one biasing element (140), adapted to apply a preload in the thickness direction (T) of the sensor element (110), and
at least one abut element (150), adapted to limit maximum compression of the sensor element (110) in the thickness direction (T) of the sensor element (110).
